# EUROPÄISCHE PATENTSCHRIFT

(11) **EP 0 935 877 B1**
(45) Veröffentlichungstag und Bekanntmachung des Hinweises auf die Patenterteilung: **07.08.2002**
(21) Anmeldenummer: 97945789.2
(22) Anmeldetag: 25.10.1997
(51) Int. Cl.: H04N 1/21, H04N 1/00

(54) **VERFAHREN UND VORRICHTUNG ZUR HERSTELLUNG VON POSITIVBILDERN**
METHOD AND DEVICE FOR PRODUCING POSITIVE IMAGES
PROCEDE ET DISPOSITIF POUR PRODUIRE DES IMAGES POSITIVES

(30) Priorität: 29.10.1996 DE 19644902
(43) Veröffentlichungstag der Anmeldung: 18.08.1999
(73) Patentinhaber: ISI Fotoservice GmbH, 96047 Bamberg (DE); Greiner, Luitpold, 96049 Bamberg (DE)
(72) Erfinder: GREINER, Luitpold, D-96049 Bamberg (DE)
(74) Vertreter: Dreykorn-Lindner, Werner, Dipl.-Ing.
(86) Internationale Anmeldenummer: DE9702481
(87) Internationale Veröffentlichungsnummer: WO9819451

(56) Entgegenhaltungen:
- EP-A- 0 580 293
- WO-A-92/05660
- US-A- 5 383 029
- US-A- 5 574 533

## Beschreibung

Die Erfindung betrifft in erster Linie ein Verfahren zur Herstellung von Positivbildern, bei dem der Filmstreifen entwickelt und Positivbilder hergestellt werden mit einem Filmabtaster (Patentanspruch 1). Weiterhin betrifft die Erfindung eine Vorrichtung mit einer Streifen-Filmentwicklungseinrichtung und mit einer Einrichtung zur Erzeugung eines Positivbildes mit einem Filmabtaster (Patentanspruch 7).

In zunehmendem Maße wird bei allen Gelegenheiten fotografiert, um Erlebnisse und Ereignisse festzuhalten und der belichtete Film wird in einer Annahmestelle für Fotoarbeiten zur Entwicklung und Herstellung von Papierbildern abgegeben. In der Regel gelangen von hier die Filme dann zu einem Fotolabor, wo die Negativfilme entwickelt und je gelungener Aufnahme ein Papierbild hergestellt wird. Anschließend werden die Abzüge samt ihrer Negative in Photolabortaschen gesteckt und die Kosten des Auftrags berechnet. Das Fotolabor liefert die fertigen Bilder zusammen mit den Negativen wieder bei den Annahmestellen ab und von dort werden die Bilder dann vom Kunden abgeholt.

In jüngster Zeit finden zunehmend sogenannte "Minilabs" breite Anwendung. Die eigentliche photoiechnische Tätigkeit geschieht hier räumlich direkt in der Film-/Bild-Annahmestelle. Bis auf einige Details (z.B. Einzelfilm statt Rollenbelichtung) ist die Vorgehensweise jedoch prinzipiell identisch wie bei der (Groß-) Laborverarbeitung. Dies gilt insbesondere für Logistik und Handling-Probleme.

Das im Fotolabor zu entwickelnde Filmmaterial besteht beim Schwarzweißfilm aus einem meist sehr dünnen Träger, für den Nitrocellulose, Acetylcellulose oder Metall verwendet wird. Das fotografische Bild entsteht dadurch, daß die vom abzubildenden Gegenstand oder Objekt ausgehenden Lichtstrahlen durch das Linsensystem der Aufnahmekamera auf die lichtempfindliche Schicht des Films geleitet werden. Jeder Lichtstrahl stößt dort, wo er auf den Film trifft, auf Silberbromid-Kriställchen, die dabei aktiviert werden. Trifft beim späteren Entwicklungsprozeß im Entwicklerbad die chemisch wirkende Bildentwicklerlösung auf ein durch Belichtung aktiviertes Silberbromid-Kriställchen, dann reduziert der Entwickler das betreffende Silberbromidkörnchen und seine Umgebung zu schwarzem Silbermetall. Unbelichtetes Silberbromid wird nicht reduziert und kann mit dem Fixierbad (einem Komplexlösemittel für unbelichtetes Silberbromid) aus der Filmschicht herausgelöst werden.

Nach dem Auswaschen der Entwickler- und Fixierlösungen aus dem Film und nach dem Trocknen liegt das Negativ vor (natürlich kann das Negativ darüber hinaus durch Zwischenbäder, Zwischenbelichtung, Wärmebehandlung usw. noch vielfältig beeinflußt werden). Auf einem Negativ erscheint nun beispielsweise der Schatten weiß und die Sonne schwarz. Belichtet man durch ein solches Negativ hindurch das photographische Positivmaterial oder photographisches Papier, dann fällt durch den dunklen Negativteil kein Licht auf das Photopapier; nur durch die hellen Stellen hindurch kann das Photopapier belichtet werden. Die belichteten Photopapierstellen werden beim Entwicklungsprozeß wieder dunkel, die unbelichteten Stellen bleiben hell. Die hellen Schatten des Negativs werden im Positiv dunkel, so wie es das Auge auch in Wirklichkeit gesehen hat, und entsprechend wird die schwarze Sonne des Negativs im Positiv wieder hell.

Für die Herstellung von Farbbildern gibt es zahlreiche sehr unterschiedliche Verfahren; im Prinzip gleichen sich jedoch alle Verfahren: Man muß drei Grundfarbenbilder herstellen, die erst in ihrem Zusammenwirken ein farbiges Bild erzeugen.

Die Siebverfahren beruhen auf dem Prinzip der chromogenen Entwicklung. Den drei übereinanderliegenden Schichten (je für einen Spektralbereich sensibilisierte Schwarzweißemulsionen, zu denen noch eine dünne Gelbfilterschicht zwischen der obersten, blauempfindlichen, unsensibilisierten, und den übrigen lichtempfindlichen Schichten kommt) sind spezifische Farbbildner (Farbkuppler, Farbkomponenten) beigegeben, z. B. Phenole und Naphthole für die Farben Blau bis Blaugrün und Verbindungen mit reaktionsfähigen Methylengruppen fiir die Farben Gelb bis Purpur. Die Farbbildner haben die Eigenschaft, mit den Oxydationsprodukten bestimmter Schwarzweißentwickler (p-Phenylendiamin-Derivate) parallel zum Schwarzweißprozeß die entsprechenden Farbstoffe zu bilden. Mit dem Schwarzweißbild entsteht somit ein Farbbild, das übrigbleibt, wenn die Silberschwärzung durch Ausbleichen entfernt wird. Da das Licht die drei Schichten nacheinander durchläuft, ergibt sich der Farbeindruck durch subtraktive Farbmischung.

Analog zum Schwarzweißbild ist ein Negativ-Positiv-Prozeß oder Umkehrentwicklung erforderlich, d.h., die blauempfindliche Emulsion enthält eine Gelbkomponente, die mittlere grünempfindliche Schicht eine Purpurkomponente, die unterste rotempfindliche eine Blaugrünkomponente, die zusammen nach der Entwicklung und dem Ausbleichen des Silberbildes ein komplementärfarbiges Negativ bilden. Von ihm kann man durch Kopieren oder Vergrößern auf ebenfalls dreischichtiges Farbmaterial Positive (Papierbilder) und Diapositive herstellen; auch Schwarzweißkopien sind möglich.

Aufgrund der prinzipiellen Farb-Nebendichte-Probleme bei der Farbreproduktion - das klassische fotografische Positivverfahren ist im Prinzip ein solches - und zum Entschärfen der Belichtungsproblematik bei der Aufnahme (Objekt-Lichtkontraste von mehr als 1 : 100.000 können vorkommen) hat sich für die Herstellung von Positivbildern nach dem klassischen Kopierverfahren die Verwendung von Negativ-Film-Material mit flacher Kontrastkennlinie (Gamma der Gradationskurve kleiner als 0,5) als günstig erwiesen. Durch den Einsatz elektronischer Maskierungsverfahren (Farbmatrix zur Kompensation der Farb-Nebendichte) kann man im Prinzip auch mit gradationsmäßig flachem Positiv-Filmmaterial gleichwertige Farbergebnisse erzielen.

Aus verschiedenen Gründen, z.B. um den Versand zu erleichtern oder die Archivierung zu vereinfachen, werden seit vielen Jahren die so entwickelten Negative in mehrere Streifen geschnitten, so daß z B. von einem ganzen Film mit 36 Aufnahmen insgesamt 9 Negativstreifen mit je 4 Negativen entstehen. Von vielen Aufnahmen werden weitere Papierbilder gewünscht und zu diesem Zweck müssen die Negative wieder über die Annahmestelle an das Fotolabor gegeben werden. Dabei muß der Besteller genau formulieren, von welcher Negativnummer er wieviele Abzüge wünscht, in welcher Größe er seine nachbestellten Fotos wünscht und ob diese auf glänzendem oder mattem Papier hergestellt werden sollen.

Um die Fehlerquote beim Nachbestellen zu minimieren ist ein Verfahren aus der DE-C1-42 10 171 bekannt, bei dem eine standardisierte maschinenlesbare Nachbestellungskarte benutzt wird. Zwecks Bearbeitung von Nachbestellungen fotografischer Abzüge werden die Nachbestellungskarten von Kunden und/oder Verkäufern ausgefüllt. Im Fotolabor werden die auf den Nachbestellungskarten eingetragenen Negativnummern und die Anzahl der jeweils davon gewünschten Bilder von einer Leseeinheit gelesen und diese Informationen an eine übliche Verarbeitungseinheit weitergeleitet. Weiterhin werden in diese Verarbeitungseinheit dann die Negativstreifen in geeigneter Weise eingeführt, um dort aufgrund der Informationen vom Lesegerät bearbeitet zu werden.

Der Kunde markiert in der standardisierten Nachbestellungskarte gemäß der DE-C1-42 10 171 zunächst die gewünschte Bildgröße. Hier werden z.B. drei am häufigsten bestellte Bildgrößen angeboten. Eine Markierung im Feld "Format sonstige" teilt dem Fotolabor mit, daß der Kunde Sonderwünsche in der Bildgröße hat und verhindert durch einen entsprechenden Sperrbefehl im Lesegerät des Fotolabors, daß der Auftrag falsch ausgeführt wird. Dieser Auftrag muß nun einem anderen Verarbeitungsweg zugeführt werden. Die Eintragungen auf der Nachbestellungskarte können handschriftlich oder maschinell in binärdezimaler Form oder in Klarschrift vorgenommen werden.

In gleicher Weise verhält es sich mit den Markierungen des Bestellers im Bereich "Oberfläche". Auch hier soll bei abweichendem Oberflächenwunsch eine Verarbeitungssperre im Lesegerät erfolgen. Eine Aufhebung dieses Sperrbefehls kann erst dann vorgenommen werden, wenn es technisch möglich ist, unterschiedliche Oberflächen in wechselnder Folge herstellen zu können.

Vier weitere Markierungsfelder in der Kopfleiste der standardisierten Nachbestellungskarte gemäß der DE-C1-42 10 171 stehen für Informationen zur Verfügung, die derzeit nicht definiert sind. Hier können beispielsweise die Alternativwünsche "mit weißem Rand" oder "randlos" oder andere Sonderformen aufgeführt werden. Die Schaffung von derartigen freien Reserven ist erforderlich, weil zu entwickelnde Lesegeräte auch dann noch zum Einsatz kommen müssen, wenn neue Bildarten definiert werden sollen.

Der größte Teil der Nachbestellungskarte ist naturgemäß zur Markierung der Negativnummern und der jeweils davon gewünschten Bildmenge belegt. Die Aufteilung der Bestellfelder in vier Negative in einer Reihe entspricht in etwa der physikalisch vorliegenden Form der nach der Filmentwicklung in einzelne Filmstreifen aufgeteilten Gesamtfilmlänge. Eine solche reihenweise Anordnung stellt eine wesentliche Erleichterung beim Auffinden der richtigen Negative und dem dazu passenden Bestellfeld dar. Die Nummern von 1 bis 36 stellen die Negativnummern dar, wie sie auf jedem Kleinbildfilm bei der Herstellung des Films einkopiert werden. Hilfsweise werden alle so einkopierten Negativnummern nochmals im Abstand einer halben Negativlänge wiederholt und zusätzlich mit dem Buchstaben "A" versehen, weil es bei der Verwendung von streifenförmigen Kleinbildfilmen auf Grund der unterschiedlich ausgeführten Kamerakonstruktionen keinen streng definierten Ort des Bildes Nr. 1 gibt und zudem das Rastermaß der Bilder in verhältnismäßig weiten Grenzen schwanken kann.

Auf der Nachbestellungskarte sind jeder Negativnummer vier Zahlenfelder mit den Ziffern 1, 2, 4 und 8 mit je einem darunter befindlichen, leeren Markierungsfeld zugeordnet. In einem oder mehreren Markierungsfeldern neben der Negativnummer, kann der Besteller jeweils eine Markierung anbringen, welche die genaue Anzahl der gewünschten Fotoabzüge kennzeichnet, so daß durch die Kombination der vier Markierungsfelder auf diese Weise 0 bis 15 Bilder von jedem einzelnen Negativ eines ganzen Filmes zu bestellen sind. Werden keine Markierungen neben einem Negativfeld gemacht, so ist das gleichbedeutend damit, daß von diesem Negativ keine Nachbestellungen gewünscht werden.

Die so ausgefüllte Nachbestellungskarte gelangt nun über den üblichen Händlerweg zusammen mit den entsprechenden Negativen in das Fotolabor. Um den Kopiervorgang zu automatisieren, werden die einzelnen Negativstreifen auf ein gemeinsames Trägerband geklebt, so das am Ende eine Rolle mit vielen Negativstreifen von vielen verschiedenen Kundenaufträgen entsteht, die eine automatische Kopiermaschine durchlaufen kann. Dazu muß parallel zu dieser Filmrolle ein Datenträger erstellt werden, der ein elektronisches Abbild der Filmrolle darstellt. Dieser Datenträger enthält alle Informationen, die es der Kopiermaschine erlauben, von den bestellten Negativen die jeweilige Anzahl von Bildern automatisch zu kopieren.

Dazu gehört, daß zuvor alle Bestellwünsche der Fotografen eingespeichert werden müssen. Bedingt durch die Vielzahl der unterschiedlichen Bestellformulare kommt es bei der manuellen Eingabe zu Fehleingaben, die zu Falschlieferungen führen. Die Fehlerquote, die sich durch Fehlinterpretationen handschriftlicher Mitteilungen ergibt, wird durch die statistisch zu erwartenden Fehleingaben, wie sie bei der manuellen Eingabe von Zahlenwerten über lange Arbeitsstunden hinweg entstehen, nochmals erhöht.

Weiterhin dürfen sich auf der Rolle von zusammengeklebten Negativstreifen nur Negativstreifen befinden, von denen Abzüge in der gleichen Bildgröße und Oberfläche gemacht werden sollen. Zu einem Formatwechsel sind Kopierautomaten heutiger Generation, bei denen kurze Negativstreifen an ein Trägerband angeklebt und zu einer Filmrolle aufgespult werden, nicht in der Lage. Vor allem stellen diese sogenannten "Mischaufträge" im Laborbetrieb eine erhebliche Komplizierung der Verfahrensweise dar, mit entsprechenden logistischen, technischen und damit kostenmäßigen Problemen.

Um die manuelle Eingabe zu reduzieren und format- und bildoberflächengleiche Nachbestellungsaufträge zu größeren Verarbeitungseinheiten zu verbinden, ist beim Gegenstand der DE-C1-42 10 171 die Nachbestellungskarte vorgesehen. An einem Lesegerät, das die Nachbestellungskarte liest, müssen vor Arbeitsbeginn deshalb die Daten über die derzeit zu bearbeitende Bildgröße und -oberfläche über ein Bedienerfeld eingegeben werden. Wird nun eine Nachbestellungskarte in das Lesegerät gesteckt, so wird erst kontrolliert, ob die auf der Nachbestellungskarte markierten Felder "Bildformate und "Oberfläche" mit den zuvor eingestellten Grunddaten übereinstimmen. Ist das der Fall, so kann die Bearbeitung fortgesetzt werden. Weichen diese Informationen jedoch voneinander ab, so ist das Lesegerät für eine Weiterbearbeitung automatisch gesperrt. Auf diese Weise wird eine Falschausführung der nachbestellten Bilder automatisch verhindert.

Wurde vom Lesegerät Übereinstimmung erkannt, dann werden alle durch Kreuze, Striche, Punkte oder auf andere Weise markierten Stückzahlfelder auf der Nachbestellungskarte gelesen und auf ein magnetbandähnliches Datenträgermaterial elektromagnetisch aufgezeichnet. Im Lesegerät selbst erfolgt dabei vorher eine Umsetzung der binärdezimalen Markierungswerte in absolute Zahlenwerte. Gleichzeitig ermittelt das Lesegerät aus der geometrischen Anordnung der markierten Stückzahlfelder die Negativnummem, von denen Bilder angefertigt werden sollen. Mindestens ein Kennzeichen - hier vorzugsweise in Form eines gedruckten schwarzen Punktes ausgeführt - auf der Nachbestellungskarte wird vom Lesegerät erkannt und läßt so das Lesegerät wissen, daß die Nachbestellungskarte ordnungsgemäß und vollständig eingeführt ist und der Lesevorgang durchgeführt werden kann. Auch die geometrische Zuordnung der markierten Bestellfelder zu der gewünschten Negativnummer wird dadurch sichergestellt.

Der Lesevorgang selbst kann sowohl im Ruhezustand der Nachbestellungskarte als auch im "Durchlaufverfahren" mit nur einer einzigen Reihe von Leseköpfen erfolgen. Die Auswertung der Markierungsfelder kann aber auch über jede andere Art von bekannten Scannern oder über eine andere bekannte Auswertungslogik erfolgen. Die vom Lesegerät ermittelten Daten werden in übersichtlicher Form auf einer handelsüblichen Anzeigeeinrichtung sichtbar gemacht, so daß das Bedienungspersonal jetzt die für die Herstellung der Bilder erforderlichen Negativstreifen der Auftragstasche entnehmen und dem Verarbeitungsgerät zuführen kann.

Nach der Entwicklung der Bänder mit den aufbelichteten Bildern werden diese an einer entsprechenden Umrollstation einer Sichtkontrolle mit Anbringung bildspezifischer Korrekturen fiir eine Wiederholkopie unterworfen. Nicht verkaufsfähige Bilder, die wiederholt werden sollen, werden mit einer abtastbaren Marke versehen und in einer Schneidvorrichtung aussortiert. Ist die Bearbeitung eines Kundenauftrages abgeschlossen, so wird das dem Lesegerät per Knopfdruck mitgeteilt. Das Lesegerät kann nun die Summe aller bestellten Bilder eines Kundenauftrages ermitteln und diese Gesamtstückzahl zur Kontrolle dem Verarbeitungsgerät überstellen und/oder diese Gesamtstückzahl für eine spätere Endkontrolle auf das auf der Nachbestellungskarte vorgesehene Feld "Summe" mittels eines bekannten Druckwerkes ausdrucken. Mittels eines geeigneten Mechanismus wird die Karte vom Lesegerät wieder freigegeben, damit sie als Bestelldokument dem Fotografen wieder übergehen werden kann. Sind die bestellten Bilder am Ende des Verarbeitungsdurchlaufes fertiggestellt, wird dem fertigen Auftrag wieder eine neue Nachbestellungskarte beigelegt, so daß der Fotograf eine erneute Nachbestellung ohne Mißverständnisse in Auftrag geben kann.

Aus der DE-C2-25 13 873 ist ein zur DE-C1-42 10171 ähnliches Verfahren zur Abwicklung und Bearbeitung von Aufträgen oder dergleichen zur Herstellung fotografischer Kopien von in kurzen Filmstreifen enthaltenen Kopiervorlagen bekannt. Bei diesem Verfahren sind an den Filmstreifen selbst sogenannte Datenträgerstreifen zur Aufnahme maschinell lesbarer Daten befestigt. Die Filmstreifen werden in Taschen angeliefert mit Angaben über Filmformat, Größe und Anzahl der Kopien sowie maschinell lesbare Angaben über den Auftraggeber bzw. Annahmestelle und Auftragsnummer. Im Fotolabor werden die Vorlagenstreifen nach Negativ- und Kopierformat sortiert und die davon in Bandform erstellten Kopien nach der Entwicklung geschnitten und in der direkten oder umgekehrten Reihenfolge des Kopierens einer Sortier- und Abfertigungseinrichtung zugeführt und mit den zugehörigen angelieferten Vorlagenstreifen und Auftragstaschen zusammengefuhrt. Durch Zählen der erstellten Kopien und durch Lesen der Daten werden die Kosten des Auftrags ermittelt und dem Auftraggeber belastet.

Um nun das Zusammenführen von Bildern, Negativen und Tasche des jeweiligen Auftrags verwechslungssicher durchzuführen, sind in den Datenträgerstreifen Angaben über Negativnummer, Kopienzahl, Kopienformat und -art in maschinell lesbarer Form eingegeben. Die Daten über Annahmestelle und/oder Auftragsnummer werden an einem Vorbereitungsplatz maschinell von der Tasche gelesen und auf den Datenträger maschinell lesbar übertragen. Anschließend werden die Datenträger zusammen mit den zugehörigen Auftragstaschen nach Vorlagen-, Kopienformat und/oder Kopienart sortiert und die Vorlagen gleichen Vorlagen- und/oder Kopienformates einer für Streifenverarbeitung angepaßten Kopiervorrichtung zugeführt.

Im einzelnen weist der Vorbereitungsplatz eine Lesevorrichtung fiir die Daten über Annahmestelle und Auftragsnummer von der Tasche, eine Eingabevorrichtung für die Daten über Film-Format, Größe, Anzahl und/oder Vorlagennummer der gewünschten Kopien und eine Vorrichtung zur Aufzeichnung der gelesenen und eingegebenen Daten in maschinell lesbarer Form in den Datenträger auf. Weiterhin ist eine Sortiervorrichtung zum Sortieren der Datenträger mit daran befestigten Vorlagestreifen und der zum gleichen Auftrag gehörigen Auftragstasche unter Beibehaltung der Reihenfolge vorgesehen, welche paarweise angeordnete, jeweils für Vorlagenstreifen bzw. Taschen vorgesehene Magazine, deren Weichen paarweise entsprechend den Angaben über Vorlagenart und/oder Kopiengröße gesteuert sind, aufweist.

Die Kopiervorrichtung weist ein Rollenkopiergerät mit einem Adapter fiir Vorlagenmagazine, eine die Vorlagen aus dem Magazin entnehmende Vorrichtung, eine Lesevorrichtung für die Angaben über Vorlagennummer und Anzahl der Kopien, eine Transportvorrichtung mit einer Positioniervorrichtung für die Vorlagenstreifen in der Kopierstellung sowie eine Kopierzyklussteuerung entsprechend den gelesenen Daten auf. An dem Kopiergerät ist ein Fühler für Auftragsende-Marken des Datenträgers und ein von dem Fühler gesteuerter Geber zum Setzen von Auftragsende-Marken auf das Kopienband vorgesehen.

Zum Zusammenführen von Bildern, Filmstreifen und Auftragstasche der jeweiligen Aufträge ist nach der Kopiervorrichtung eine Sortier- und Abfertigungseinrichtung vorgesehen. Im einzelnen weist die Sortier- und Abfertigungseinrichtung ein, von Bildmarken gesteuertes Schneidgerät für das Kopienband mit einer Abtastvorrichtung für Auftragsende-Marken zum Stillsetzen des Schneidgerätes und eine Fördervorrichtung zum Ausgeben von Vorlagenstreifen aus dem Vorlagenmagazin mit einer Lesevorrichtung für Auftragsnummern oder Auftragsende-Marken auf. Weiterhin sind eine Aufnahmevorrichtung für das Lesen der auf der Auftragstasche aufgebrachten Auftragsnummer und eine Vergleichsvorrichtung für die gelesenen Auftragsnummern auf Datenträger und Tasche sowie mit einer bei Abweichung der Nummern voneinander wirksam werdenden Warneinrichtung vorgesehen.

Obwohl Teile der Bearbeitungsvorgänge für die Abwicklung von Nachbestellungen automatisiert sind, ist doch eine Vielfalt von verschiedenen Arbeitsvorgängen erforderlich, wie aus nachfolgender Beschreibung deutlich wird. Am Vorbereitungsplatz entnimmt die Bedienungsperson aus der Tasche die Filmstreifen mit den Datenträgem und legt die entleerte Tasche in einen Schlitz des Taschenlesers ein. Bei richtigem Einlegen der Tasche liegt das Codefeld genau im Bereich der Leseeinrichtung. Die Filmstreifen mit dem Datenträger werden einzeln auf die Sichtplatte aufgelegt, die zum Kopieren vorgesehenen Negative auf Kopierfähigkeit überprüft und die Platzziffer des zu kopierenden Negativs auf dem Streifen und die Anzahl und das Format der Kopien bei der Dateneingabeeinrichtung eingetippt. In dieser Eingabeeinrichtung ist ein Speicher vorhanden, der diese Daten festhält, bis der zugehörige Datenträger in die Vorrichtung eingegeben wird und diese Daten in den Datenträger eingestanzt werden. Bis zum Zeitpunkt des Stanzvorganges sind die zum Stanzen vorgesehenen Daten an dem Schirm sichtbar. Die Bedienungsperson hat also die Möglichkeit, die Richtigkeit der eingegebenen Daten laufend zu überprüfen. Außerdem werden eingelocht in den Datenträger die Anzahl der Streifen, die zu diesem Auftrag gehören, sowie die im Feld der Tasche enthaltenen Daten über den Auftraggeber und die Auslieferungsstelle, die von dem Lesegerät gelesen und an die Dateneingabevorrichtung weitergeleitet werden.

Nach dem Ende des Stanzvorganges tritt eine Transportvorrichtung in Tätigkeit, welche die aus den Schlitzen heraustretenden Filmstreifen und die Tasche dem Sortiertisch zuführen, wo sie entsprechend paarweise gesteuerte Weichen in jeweils einen aus einer Reihe von Magazinbehälter gelangen lassen. Die Weichen werden am besten von der Eingabevorrichtung für das Kopienformat gesteuert. Für Aufträge mit mehr als einem Filmstreifen für ein bestimmtes Format kann die Weiche angehalten werden, bis alle Streifen desselben Auftrags in das Magazin gelangt sind.

Die Reihe von Magazinen, in denen nun jeweils die Aufträge mit gleichem Negativformat und gleichem Kopienformat zusammengefaßt sind, gehen nun an ein Kopiergerät. Das Gerät hat den üblichen Aufbau mit einer Lichtquelle, einem Spiegellampenhaus, einer Vorlagenbühne und einem Abbildungsobjektiv zum Abbilden der in der Vorlagenbühne befindlichen Kopiervorlage auf ein streifenförmiges Kopiermaterial, das von einer Abwickelspule schrittweise zu einer anderen Aufwickelspule bewegt wird.

In der Vorlagenebene werden aus dem Vorratsmagazin die Filmstreifen mit dem zugehörigen Datenträger durch eine von unten wirkende Hubvorrichtung angehoben, bis sie in den Griffbereich einer Transportrolle gelangen. Diese Transportrolle fördert den jeweils obersten Negativstreifen (je nach Entfernung zu der Kopierstation mittels weiterer Transportrollen) vorbei an einer Lesestation für die Daten auf dem Datenträger in die Kopierstellung, in der das zu kopierende Negativ im Strahlengang des Kopiergerätes liegt. Die Lesestation steuert auch den Kopierzyklus des Kopiergerätes, so daß ohne Schwierigkeiten größere Anzahlen von Kopien von einem einzelnen Negativ möglich sind. Eine Abtastvorrichtung in der Kopierstellung für die Perforationslöcher oder andere Markierungen der zu kopierenden Negative sorgen für ein genaues Positionieren in der Kopierstellung. Schließlich ist am Wege des Kopiermaterialbandes eine Markiervorrichtung angeordnet, die sowohl nach jeder Kopie eine Schnittmarke als auch die Auftragsende-Markierung auf die Rückseite des Kopiermaterialbandes aufbringt. Diese Markiervorrichtung ist gesteuert von einer Vergleichsvorrichtung für die gelesenen Auftragsnummem, angeschlossen an die Abtastvorrichtung. Jeweils wenn eine neue gelesene Auftragsnummer von der eingespeicherten, vorhergehenden Auftragsnummer abweicht, wird eine Auftragsendemarke ausgelöst, die alte Auftragsnummer gelöscht und die neue eingespeichert. Nach Abschluß der Kopiervorgänge in diesem Streifen fördert eine Transportrolle (evtl. im Zusammenwirken mit weiteren Rollen oder Förderbändern) den Filmstreifen in das Ablagemagazin.

Die Dateneingabe in den Datenträger an dem Vorbereitungsplatz kann so erfolgt sein, daß zu Beginn des Streifens die Daten alle vorhanden sind, insbesondere die Platzziffern zu kopierender Negative. Diese Daten werden beim Einlaufen des Streifens in die Kopiervorrichtung gelesen und gespeichert, so daß aufgrund der gespeicherten Daten die zu kopierenden Vorlagen, evtl. eben nur eine oder zwei pro Streifen, nacheinander in Kopierstellung gebracht werden.

Die andere Möglichkeit ist, jeweils auf Höhe der Kopiervorlage in dem Datenträger die entsprechenden Daten in automatisch lesbarer Form einzubringen. Die Lesestation muß auf Höhe der Kopierstelle oder mit einer entsprechenden Speichervorrichtung vorher angeordnet sein, um jeweils den Vorlagentransport dann still zusetzen, wenn die zugehörige Vorlage in Kopierstellung gelangt ist. Die Anzahl der erforderlichen Kopien kann dabei ebenfalls aus dem Datenträger in räumlicher Zuordnung zur Kopiervorlage entnommen werden und, wenn diese Kopien getätigt sind, kann der Transport bis zur nächsten Marke eines zu kopierenden Negativs fortgesetzt werden.

Nach dem Belichtungsvorgang erfolgt das Entwickeln des Kopiermaterialstreifens, dem eine Überprüfung der hergestellten Kopien im Sinne einer Qualitätskontrolle folgt. Unbefriedigende Kopien werden durch eine automatisch abtastbare Marke gekennzeichnet, z.B. durch eine Fettstiftmarkierung. Diese Kopienrolle mit den gegebenenfalls als unbrauchbar gekennzeichneten Kopien, das Magazin mit den kopierten Negativen und ein weiteres Magazin mit den Taschen muß nun jeweils zu fertiggestellten Aufträgen zusammengeführt und abgerechnet werden. Diese Vielfalt von Arbeitsvorgängen wird an einem Arbeitsplatz zur Verarbeitung von streifenförmigen Filmen vorgenommen.

Im Ausgangszustand sind an diesem Arbeitsplatz auf der Abspulvorrichtung eine volle Bildrolle, im Magazin die Filmstreifen mit den Datenträgern (in der gleichen Reihenfolge wie die Kopien in dem Band gestapelt) und daneben die Taschen in dem Magazin vorhanden. Der Arbeitszyklus beginnt mit dem Schneidvorgang des Bildbandes bis zur ersten Auftragsende-Marke. Gleichzeitig kann aus dem Magazin der Stapel der zugehörigen Filmstreifen in die Sammelstelle gefördert werden, bis auch dort eine Auftragsende-Marke den Transport stillsetzt. Die Bedienungsperson gibt dann die zugehörige Tasche aus dem Magazin in den Schlitz, wo die Daten des Auftraggebers für die Abrechnung eingelesen werden. Schließlich gibt die Bedienungsperson die erforderlichen weiteren Daten über das Tastenfeld ein. Ein angeschlossener Rechner berechnet nun aufgrund der Kopienzahl, des Kopienpreises und sonstiger Daten, wie Preis der Negativ-Entwicklung, den Gesamtpreis und über das Druckwerk am Schlitz wird der Gesamtpreis auf das Klebeetikett aufgedruckt. Gleichzeitig können die fertigen Bilder aus der Sortiereinrichtung und die Filmstreifen aus der Sammelstelle entnommen, beide in die Tasche hineingegeben und diese mit dem Etikett mit der Abrechnung verschlossen werden. Die Kosten des Auftrags gehen gleichzeitig zu einem zentralen Verrechnungscomputer, dem die Kosten zugleich mit der die Kosten tragenden Stelle eingegeben werden. Der Auftrag wird somit auf das Konto der Sammelstelle belastet, die dann über einen gewissen Zeitraum eine Abrechnung bekommt, aus der die Kosten jedes einzelnen Auftrags zu ersehen sind. Die Aufträge in den verschlossenen Taschen werden dann in Sammelbehälter abgefüllt und den jeweiligen Sammelstellen zugeführt.

Die beschriebene Verfahrensweise ist nur anwendbar, wenn innerhalb eines Auftrags nur Kopien gleicher Abmessungen von Vorlagen des gleichen Formates verlangt sind. Ist dies nicht der Fall, muß der Auftrag in Teilaufträge für jedes Vorlagen- und Kopienformat aufgeteilt werden.

Eine weitere Vorrichtung zum Abfertigen von Kopieraufträgen ist aus der DE-C2-20 66 177 bekannt, welche eine Einrichtung zum Schneiden von Bildbändern aufgrund von in Zuordnung zu den Bildstegen angeordneten, abtastbaren Marken und Auftragsende-Marken aufweist. Weiterhin sind ein beim Auftragswechsel rückstellbarer Zähler für die Feststellung der Anzahl der zu einem Auftrag gehörenden Kopien sowie eine Druckstation zum Ausdrucken der Zählwerte bzw. des durch die Anzahl der Kopien gebildeten Endpreises auf der zum Auftrag gehörigen Arbeitstasche vorgesehen.

Um für die Auftragsberechnung keinen Datenträger erstellen zu müssen, ist an der Druckstation eine Leseeinrichtung fiir auf der Auftragstasche automatisch lesbar aufgedruckte codierte Kunden- und Kommissionsnummern vorgesehen, welche die gelesenen Nummern an einen die für den jeweiligen Kunden spezifischen Auftragskosten ermittelnden Rechner weiterleitet. Weiterhin weist der Rechner eine Speichereinrichtung mit den einzelnen Kundenkonten auf, die zugleich mit dem Ausdrucken mit den Auftragskosten belastbar sind.

Schließlich ist aus der EP-A1-0 652 480 ein Verfahren zur Vorbereitung von Filmstreifen fiir Nachbestellaufträge bekannt, bei dem die zu einem Kundenauftrag gehörigen Filmstreifen, die jeweils eine Anzahl von numerierten Kopiervorlagen enthalten, in eine Vorbereitungsstation eingespeist werden. Dort werden sie an ein Trägerband angeklebt und zu einer Filmrolle aufgespult, welche bei nachfolgenden Verarbeitungsstationen einsetzbar ist.

Es werden auch die kundenspezifischen Auftragsdaten hinsichtlich der gewünschten Anzahl Kopien bestimmter Kopiervorlagen und gegebenenfalls des gewünschten Kopierformats über eine Eingabeeinheit in die Vorbereitungsstation eingegeben und auf ein Trägermedium abgespeichert, welches mit den nachfolgenden Verarbeitungsstationen kompatibel ist. Dabei werden die kundenspezifischen Auftragsdaten vor dem Einspeisen der Filmstreifen eingegeben.

Die eingespeisten Filmstreifen werden vor dem Ankleben an das Trägerband automatisch hinsichtlich ihrer Lage parallel zur Transportrichtung und hinsichtlich der Nummernfolge der Kopiervorlagen auf dem jeweiligen Filmstreifen untersucht, und durch Vergleich mit den eingegebenen kundenspezifischen Auftragsdaten wird geprüft, ob der eingespeiste Filmstreifen für das Abarbeiten des Kundenauftrags erforderlich ist. Im Falle einer fehlerhaften Lage eines Filmstreifens bzw. im Falle eines für die Auftragsabarbeitung überflüssigen Filmstreifens wird das Bedienungspersonal automatisch auf den jeweiligen Fehler aufmerksam gemacht, bzw. es wird der betreffende Filmstreifen automatisch ausgestoßen, bevor er an das Trägerband angeklebt wird.

Die in der EP-A1-0 652 480 beschriebene Vorrichtung zur Vorbereitung von Filmstreifen für Nachbestellaufträge umfaßt einen Eingabebereich, in dem eine Anzahl von Kopiervorlagen aufweisende Filmstreifen eines Kundenauftrages entlang einer Arbeitsfläche einem Einzugswalzenpaar zugeführt werden, eine Klebestation zum Ankleben der eingespeisten Filmstreifen an ein Trägerband, das über ein Umlenkwalzenpaar geführt ist, und eine Rechnereinheit, in welche kundenspezifische Auftragsdaten hinsichtlich der gewünschten Anzahl Kopien bestimmter Kopiervorlagen und gegebenenfalls des gewünschten Kopierformats eingegeben und auf ein mit weiteren Verarbeitungsstationen kompatibles Speichermedium aufgezeichnet werden.

Bezogen auf die Transportrichtung der Filmstreifen in der Vorrichtung sind vor dem Einzugswalzenpaar wenigstens ein erster und ein zweiter lichtelektrischer Sensor zur Detektion der Seitenkante und des hinteren Endes eines eingespeisten Filmstreifens in einem vorgegebenen Abstand von dem Einzugswalzenpaar vorgesehen. Dabei steuert der erste dem Einzugswalzenpaar nähere Sensor die Antriebsmittel fiir das Einzugswalzenpaar und gegebenenfalls noch weitere Transportwalzenpaare. Die Gegenwalze des Einzugswalzenpaars ist mit einem Umdrehungsdetektor, vorzugsweise einem Winkelencoder, verbunden. In einem vorgegebenen Abstand hinter dem Einzugswalzenpaar ist eine lichtelektrische Abtasteinheit angeordnet, welche die vorgeschobene Vorderkante des Filmstreifens detektiert und zum Erkennen von Vorlagennummern ausgebildet ist, die seitlich jeder Vorlage auf dem Filmstreifen aufgedruckt sind. Die lichtelektrischen Sensoren, der Umdrehungsdetektor, die lichtelektrische Abtasteinheit, die Antriebsmittel für das Einzugswalzenpaar und gegebenenfalls weitere Transportwalzenpaare sowie Antriebsmittel für das Umlenkwalzenpaar in der Klebestation sind mit der Rechnereinheit derart verbunden, daß einerseits detektierte Signale und Informationen an die Rechnereinheit geleitet werden und andererseits Steuersignale an die entsprechenden Antriebsmittel und gegebenenfalls noch weitere angeschlossene Transportmittel fiir die Filmstreifen gegeben werden können.

Weiterhin ist aus der DE 42 33 228 A1 ein Photographienvervielfältigungssystem bekannt, mit dem eine Hartkopie, wie z. B. ein photographischer Abzug (Photokopie) hergestellt werden kann. Um die für die Herstellung von Photoabzügen eines von einem Kunden abgegebenen belichteten Negativfilms erforderliche Zeit abzukürzen, sind ein Filmprozessor und eine Bildaufhahme (Bildabtast)- Einheit, eine Bildprozessoreinheit und ein Kopierer (Drucker) für die Aufzeichnung eines Bildes unter Verwendung von elektrischen Signalen vorgesehen. Die Bildaufnahme- Einheit tastet einen Negativfilm ab und erhält dabei Bilddaten während des Zeitraums zwischen einem Negativfilm-Entwicklungsprozeß und einem Trocknungsprozeß. Die Bildprozessoreinheit verarbeitet die von der Bildaufnahmeeinheit ausgegebenen Bilddaten. Die Verarbeitung durch die Bildprozessoreinheit umfaßt eine Korrekturberechnung, die den Filmtyp und die Original- Einzelbilder berücksichtigt sowie eine Gradationskorrektur, welche die Printer-Charakteristiken und die Kundenwünsche berücksichtigt. Der Printer druckt (kopiert) ein Bild auf ein Aufzeichnungsmaterial, das reproduziert wurde aus den Bilddaten, die von der Bildprozessoreinheit ausgegeben worden sind.

Im einzelnen wird nach der Entwicklung eines Negativfilms ein Bild eines Einzelbildes (Bildfeldrahmens) elektrisch aufgenommen. Ein aus den erhaltenen elektrischen Signalen reproduziertes Bild wird auf dem Aufzeichnungsmaterial wiedergegeben. Die Bildaufzeichnung kann daher parallel zu dem Wasch- oder Spülprozeß, dem Trocknungsprozeß und dgl. durchgeführt werden, wodurch die für die Herstellung von Hartkopien erforderliche Zeit abgekürzt wird, welcher der parallelen Behandlungszeit entspricht Die Entwicklung eines Negativfilms, welche von einem Kunden in Auftrag gegeben wird, kann deshalb innerhalb eines kürzeren Zeitraums durchgeführt werden.

Eine ähnliche Lösung zur Verkürzung des Zeitraums für die Entwicklung eines Negativfilms, welche ebenfalls einen Filmprozessor mit einer Bildaufnahme (Bildabtast)-Einheit und einen Kopierer (Drucker) für die Aufzeichnung eines Bildes auf einem Aufzeichnungsmaterial unter Verwendung von elektrischen Signalen aufweist, ist aus der DE 43 40 757 A1 bekannt. Im Unterschied zur Lösung gemäß DE 42 33 228 A1 ist die Bildaufnahmeeinheit zum Abtasten einer ursprünglichen Bildfläche und zum Erhalten von Bilddaten im Filmprozessor unmittelbar nach dem Trocknungsprozeß (Trocknungseinheit) eines entwickelten, fotografischen Farbfilms angeordnet. Die erhaltenen Bilddaten werden an eine Bildverarbeitungseinheit geschickt, um die Dichte und Farbe jeder ursprünglichen Bildfläche zu korrigieren. Dieser Korrekturprozeß beinhaltet eine Korrekturberechnung für den jeweils vorliegenden Filmtyp und die Dichte und Farbabweichung der ursprünglichen Bildflächen, sowie eine Abstufungskorrektur für die Druckercharakteristiken und den Wunsch des Kunden. Der Drucker (einschließlich eines Drucker-Prozessors) bildet einen Abzug einer Bildfläche auf einem Aufzeichnungsmaterial in Übereinstimmung mit den venirbeiteten Bilddaten. Der Drucker-Prozessor besitzt vorzugsweise ein erstes und ein zweites Belichtungssystem, wobei das erste Belichtungssystem einen Negativfilm für die Druckbelichtung verwendet und das zweite Belichtungssystem Bilddaten verwendet, die mit der zu druckenden Bildfläche in Beziehung stehen. Das erste Belichtungssystem wird verwendet zum Erstellen zusätzlicher Fotoabzüge durch Projizieren eines Bildes einer ursprünglichen Bildfläche eines entwickelten, fotografischen Films auf ein lichtempfindliches Material, und das zweite Belichtungssystem wird verwendet zum Erstellen von Fotoabzügen zum ersten Mal nach der Entwicklung eines belichteten fotografischen Films.

Das digitale Photographieren ohne Film wurde seit Mitte der neunziger Jahre einfacher und kostengünstiger. Die Auflösungen der Photos (493 × 373 und 320 × 240 Pixel) entspricht der Bildqualität handelsüblicher PC-Monitore; ein 1 Megabyte großer Speicher reicht für acht bis 16 Bilder aus. Heute beginnen sich nun die Grenzen zwischen klassischer Photographie und anderen Bildaufzeichnungssystemen zu verwischen. So werden bei Einzelbildphotographien statt Silberhalogenidemulsionen zunehmend elektronische Informationsträger, z.B. digitale Speicher verwendet. Es sind Video-Einzelbildkameras bekannt, welche die Bilddaten beispielsweise auf einer Floppy-Disk aufzeichnen und mittels besonders ausgestalteter Wiedergabegeräte kann das fertige Bild kann dann auf einem Fernsehbildschirm betrachtet und/oder über einen Drucker auf Papier gebracht werden.

In der US 5,574,533 A/hierzu korrespondierenden JP 08015784 ist ein Verfahren zur Herstellung von Positivbildern, beruhend auf solchen transportablen digitalen Speichern beschrieben. Danach kann der Kunde einen Negativfilm oder einen digitalen Speicher (Speicherkarte oder Floppy-Disk) beim Fotolabor abgeben und erhält neben den Abzügen den transportablen Speicher wieder zurück oder zusätzlich zum entwickelten Film einen transportablen digitalen Speicher, auf welchem die mit einem Scanner des Fotolabors erhaltenen digitalen Daten gespeichert sind und welchen er für weitere Abzüge entweder wieder beim Fotolabor abgeben kann oder - falls er über die entsprechende Ausstattung verfügt - zu Hause mittels seines PCs und Druckers ausdrucken kann.

Ein ähnliches Verfahren ist in der WO 92/05660 A mit transportablen digitalen Speichern - insbesondere einer CD - beschrieben, wobei dort der Kunde einen Negativfilm im Fotolabor abgibt, dieser abgetastet und die Bilddaten auf der CD gespeichert werden, und im Fotolabor Abzüge sowie die CD dem Kunden ausgehändigt werden. Auch hier hat der Kunde - falls er über die entsprechende Ausstattung verfügt - wieder zu Hause die Möglichkeit, das fertige Bild auf einem Femsehbildschirm zu betrachten, die Auswahl der nachzubestellenden Bilder auf der CD zu treffen und diese für eine Nachbestellung wieder zum Fotolabor zurückzubringen.

Beiden vorstehenden Verfahren ist gemeinsam, dass im Fotolabor keine Kopie der Bilddaten gespeichert wird, so dass für eine Nachbestellung der Kunde den transportablen digitalen Bildspeicher erst wieder heraussuchen muß, dann zur Annahmestelle/Fotolabor gehen (liegt in der Regel in einer Fußgängerzone mit hohen Parkgebühren) und dort den transportablen digitalen Bildspeicher (nunmehr anstelle des sonst erforderlichen Original-Negativs) abgeben muß. Obwohl diese Verfahren mit wesentlich höheren Kosten als bei Negativstreifen verbunden sind, wird die Nachbestellproblematik nicht gelöst und es kann nach wie von kein schnelles, kostengünstiges und für den Kunden bequemes Nachbestellsystem zur Verfügung gestellt werden.

Diese beiden Lösungen weisen den Nachteil auf, dass ein bereits entwickelter Filmstreifen den Filmprozessor nicht nochmals durchlaufen kann, so dass fiir die Nachbestellung ein zweiter Scanner (Bildaufnahmeeinheit) bzw. ein zweiter Abtastvorgang notwendig wäre. Weiterhin ist von Nachteil, dass die Bildaufnahmeeinheit im Filmprozessor angeordnet ist, also aggressiven Chemikalien und Umgebungstemperaturen von 40° Celsius ausgesetzt ist. Deshalb ist in der Praxis eine Kapselung und wegen der ausgeprägten Rauschproblematik der CCD- Elemente bei höheren Temperaturen eine Kühlung des CCD- Liniensensors erforderlich. Desweiteren ist ohne den Filmstreifen eine Nachbestellung nicht möglich.

Schließlich ist aus der EP 0 735 420 A1 eine Vorrichtung zur Herstellung von Positivbildern bekannt, bei der anhand auf der Rückseite des Positivbildes aufgedruckter Daten eine Kopie hergestellt wird. Hierfür ist eine hohe Datenkompression der Bilddaten und eine hohe digitale Speicherdichte erforderlich. Nachteilig ist wiederum, dass ohne das Positivbild eine Nachbestellung nicht möglich ist und dass eine speziell ausgestaltete Lesevorrichtung für das Lesen der Bilddaten auf der Rückseite des Positivbildes erforderlich sind. Weiterhin ist es bei einer Beschädigung der Rückseite, wie dies in der Praxis häufig beim Einkleben des Positivbildes in das Fotoalbum auftritt, ebenfalls fraglich, ob eine Nachbestellung noch möglich ist.

Obwohl derartige Vorrichtungen eine Reihe von teuren, für den einzelnen Verarbeitungsvorgang speziell ausgelegte Einzelgeräte aufweisen, ist die Herstellung photografischer Kopien von Filmstreifen mit großem Aufwand an Handarbeit und einer Vielfalt von verschiedenen Arbeitsvorgängen verbunden.

Auch bei hohem kostenmäßigen Aufwand kann die Fehlerquote bei Nachbestellungen sowie die Durchlaufzeit für einen Kundenauftrag nicht entscheidend reduziert werden.

Der Erfindung liegt gegenüber den beschriebenen Verfahren und Vorrichtungen die Aufgabe zugrunde, ein Verfahren und eine Vorrichtung zur Herstellung von Positivbildern derart auszugestalten, daß die Handarbeit und die Durchlaufzeit für einen Kundenauftrag in wirtschaftlicher Weise minimiert wird, insbesondere nicht ein nochmaliger Abtastvorgang oder ein zweiter Scanner erforderlich ist.

Diese Aufgabe wird gemäß Patentanspruch 1 durch ein Verfahren zur Herstellung von Positivbildern gelöst, bei dem alle auf dem Filmstreifen befindlichen Bilder während des Filmstreifen-Entwicklungsprozesses vollständig abgetastet und die abgetasteten Bilddaten pro Bild in einem zur Herstellvorrichtung gehörenden Massenspeicher (M) abgespeichert werden und bei dem ausschließlich aus diesen abgespeicherten Bilddaten - unter Heranziehung einer Adresse - das Erstpositiv und alle bei einer Nachbestellung anfallenden weiteren Positivbilder hergestellt werden.

Erfindungsgemäß wird der Filmstreifen bereits während des Prozesses der Filmentwicklung, unmittelbar nach dem Trockenvorgang der Schicht, bildweise abgetastet und die Bilddaten in einem Massenspeicher abgespeichert. Das erfindungsgemäße Verfahren nach Patentanspruch 1 weist den Vorteil auf, daß auf überraschend einfache Art und Weise Fehlbedienungen durch das Bedienungspersonal, die zu Störungen und/oder einer fehlerhaften Weiterverarbeitung der Kopiervorlagen (beispielsweise fehlerhafte Belichtungen) führen, zuverlässig vermieden werden. Bei der Erstkopie treten immer wieder prinzipielle Fehlbelichtungen auf (z.B. aufgrund nicht optimaler Belichtungsalgorithmen). Beim erfindungsgemäßen Verfahren müssen die betroffenen Bilder des (Negativ-) Filmstreifens nicht extra einzeln herausgesucht werden, um anschließend den gesamten fotografischen Kopierprozeß, einschließlich aller Handlings-Tätigkeiten nochmals zu durchlaufen. Vor allem werden für Nachbestellungen vom Kunden keine Negative mehr benötigt, da schon bei der Herstellung des Erstpositivs das Negativ abgetastet und abgespeichert wurde. Schräg oder verkehrt eingegebene Filmstreifen müssen nicht mehr mühsam vom Trägerband abgelöst werden und es ist keine Einrichtung erforderlich, um für das Abarbeiten eines Kundenauftrags überflüssige Filmstreifen (da von den auf ihnen enthaltenen Kopiervorlagen keine Bilder gewünscht werden) automatisch auszusortieren. Dadurch, daß von den gespeicherten Bildern das Erstpositiv und alle weiteren Positivbilder (Kopien) hergestellt (z.B. ausgedruckt) werden, können viele zeitraubende Handgriffe entfallen und durch die parallele Auftragsbearbeitung die Produktivität bei den nachfolgenden Verarbeitungsstationen erhöht werden. Zudem werde alle Alterungsprozesse des entwickelten Filmstreifens (z.B. Farbstoff-Ausbleichung durch Lichteinwirkung und chemische Zersetzung) an der physikalisch frühestmöglichen Stelle, nämlich direkt nach dem Austrocknen der Schicht an der jeweiligen Bildposition, absolut minimiert.

Erfindungsgemäß wird die obige Aufgabe gemäß Patentanspruch 7 durch eine Vorrichtung mit einer Streifen-Filmentwicklungseinrichtung und mit einer Einrichtung zur Erzeugung eines Positivbildes mit einem Filmabtaster gelöst, bei der außerhalb und direkt am Ausgang der Streifen-Filmentwicklungseinrichtung ein Abtaster für das vollständige Abtasten der Bilder des Filmstreifens angeordnet ist, bei der alle Bilddaten des jeweiligen Filmstreifens einem Massenspeicher zugeführt werden und bei der ausschließlich aus diesen abgespeicherten Bilddaten - unter Heranziehung einer Adresse - die Erstpositive des jeweiligen Filmstreifens und alle bei einer Nachbestellung anfallenden weiteren Positivbilder in der Einrichtung hergestellt werden.

Die erfindungsgemäße Vorrichtung weist den Vorteil auf, daß eine Eingabe der geschnittenen Filmstreifen in eine Vorbereitungsstation, wie beim Gegenstand der EP-A1-0 652 480, wo diese an ein Trägerband angeklebt und zu einer Filmrolle aufgewickelt werden müssen, nicht erforderlich ist. Durch den Wegfall der Filmrolle können Fehlmanipulationen, die sich negativ auf den Arbeitsablauf und insbesondere auf die Durchlaufzeit eines Kundenauftrages auswirken können, zuverlässig vermieden werden.

Bei einer bevorzugten Ausgestaltung der Erfindung gemäß Patentanspruch 2 wird die jedem gespeicherten Bild zugeordnete Adresse auf dem Positivbild mit ausgedruckt. Dieses Verfahren wird gemäß Patentanspruch 3 dadurch weiter entwickelt, indem in Klarschrift und/oder maschinenlesbaren Code zumindest die Speicheradresse als Bestellnummer auf dem Positivbild ausgedruckt wird.

Für Nachbestellungen wird in der Praxis häufig ein Verfahren benutzt, bei dem an die kurzen Filmstreifen (mit vier, fünf oder sechs Negativen) sogenannte Datenträger-Streifen (z.B. DE-C2-25 13 873) befestigt werden, auf denen der Besteller angeben kann, wieviele Vergrößerungen er von welchem der Negative des Streifens nachträglich zu den in der Regel bereits gelieferten, von jedem Negativ gefertigten Kopien haben möchte. Solche Streifen werden häufig durch Klebebänder oder durch Verschweißen wieder zu einem langen Band zusammengefügt, um dann in einem mehr oder minder automatischen Ablauf auf einem Rollenkopiergerät nacheinander kopiert zu werden. Das Problem liegt jedoch dann im Eingeben der Auftragsdaten von dem Datenträger in das Kopiergerät. Ferner bereitet es Schwierigkeiten, die zu einem langen Band zusammengefügten kurzen Filmstreifen an den Klebestellen wieder zu trennen, ohne daß ein späteres Zusammenfügen dieser Streifen von neuem dadurch unmöglich gemacht würde. Diese Nachteile werden beim erfindungsgemäßen Verfahren durch das Ausdrucken der Adresse bzw. der Bestellnummer zuverlässig vermieden. Anhand dieser Nummer kann der Besteller seinen Bestellwunsch eindeutig formulieren, so daß die Möglichkeit einer telefonischen Nachbestellung oder die Durchführung des Kopierauftrags der Nachbestellung in Selbstbedienung auf überraschend einfache Art und Weise eröffnet wird, da keine Negative mehr benötigt werden. Bei Benutzung einer maschinenlesbaren Bestellnummer werden Fehler bei der Eingabe der Auftragsdaten minimiert (z.B. Adresse und Namen des Bestellers) und eine weitgehend vollautomatische Nachbestellung ermöglicht. Zudem ist es bisher, insbesondere im Falle der Nachbestellung von Problembildern der Erstkopie (diese mußten wie vorstehend dargestellt den gesamten Kopierprozeß mindestens zweimal durchlaufen), prinzip-bedingt nicht möglich zu verhindern, daß bei einer späteren Nachbestellung der erste Fehlversuch unterdrückt wird und das nachbestellte Bild sofort mit den korrekten Kopierparametern behandelt wird, weil keine Information über die korrekten Kopierdaten mehr vorliegt. Es ist auch denkbar, auf dem Filmstreifen selbst Kopierinformationen magnetisch abzuspeichern, jedoch sind dabei im Kopiergerät zusätzliche Schreib- und Lesevorrichtungen erforderlich. Bestehen bleibt bei einem solchen System, daß immer noch der Filmstreifen selbst zur Anfertigung der Nachbestellkopie herangezogen wird, mit allen Nachteilen in Bezug auf Logistik und Handhabung.

Gemäß dem Verfahren nach Patentanspruch 4 ist vorgesehen, daß in bestimmten Zeitabständen die gespeicherten Bilder automatisch gelöscht werden.

Diese Verfahrensweise weist den Vorteil auf, daß die Kosten fiir den Massenspeicher niedrig gehalten werden können, da in der Regel Nachbestellungen zeitnah nach der Erstkopie (Erstpositiv) in Auftrag gegeben werden.

In weiterer Ausgestaltung der Erfindung gemäß Patentanspruch 5 erfolgt die Berechnung der Auftragskosten mittels eines Prozessors nach Maßgabe der Speicheradressen.

Bei Verwendung von Kopiergeräten, in denen Bildbänder (d.h. die Filme werden zu einem langen Filmstreifen zusammengeklebt) verarbeitet werden, lassen sich Kopien von Filmen der Fotoamateure weitgehend automatisch herstellen. Zur Abfertigung des Auftrages ist es jedoch erforderlich, die geschnittenen Bilder eines Auftrages mit dem Film, der in der Regel in Fünfer- oder Sechserstreifen geschnitten wird, zusammenzuführen und gleichzeitig zur Berechnung der Kosten des Auftrages festzustellen, welches Filmfabrikat vorlag, welche Konfektionierung und wieviel Kopien welcher Größe geliefert werden. Alle diese Daten sind erforderlich zur Erstellung der Abrechnung. Beim erfindungsgemäßen Verfahren gemäß Patentanspruch 5 ist vor allem bei Nachbestellungen ein solches Zusammenführen von Negativ und Bild nicht erforderlich und auf der Basis der gleichen Daten erfolgt sowohl die Steuerung des Kopiervorgangs als auch die Berechnung der Auftragskosten.

Schließlich ist in weiterer Ausgestaltung der Erfindung gemäß Patentanspruch 6 vorgesehen, daß der Prozessor in einem Gesamtverzeichnis die Auftragsdaten sowie die Speicherdaten der jeweiligen Massenspeicher abspeichert und daß anhand dieser Daten im Gesamtverzeichnis die Aktualisierung und das Löschen der Bilder im jeweiligen Massenspeicher erfolgt.

Dieses Verfahren findet vorzugsweise bei großen Kopieranstalten Anwendung und ermöglicht auf einfache Art und Weise sowohl die Verwaltung großer Speichervolumina (gebildet aus mehreren Massenspeichern bzw. Speicherbereichen) als auch deren Aktualisierung. Da beim Erreichen der maximalen Speichergrenze das Löschen der ältesten Bilder automatisch erfolgt, ist ein Überwachen dieses Vorgangs durch die Bedienungsperson nicht erforderlich.

Gemäß Patentanspruch 8 wird ein transportabler Massenspeicher benutzt. Die Streifen-Filmentwicklungseinrichtung und die Einrichtung zur Erzeugung eines Positivbildes (Positiv-Ausgabegerät z.B. Laserdrucker) weisen jeweils eine Aufnahme für den Massenspeicher auf.

Diese Ausgestaltung der Erfindung weist den Vorteil auf, daß sowohl die Nachbestellungen als auch das Erstpositiv mit dem gleichen Positiv-Ausgabegerät abgewickelt werden können, wobei keine weiteren technischen Hilfsmittel, wie Eingabe und Klebestationen erforderlich sind, und im Falle der Nachbestellung von Problembildern nicht nochmals eine Fehlkopie angefertigt wird.

In weiterer Ausgestaltung der Erfindung ist, gemäß Patentanspruch 9, die Vorrichtung gekennzeichnet durch die Bemessung der Speichergröße des Massenspeichers derart, daß Bilder im Auftragsumfang von mehr als einem Tag abgespeichert werden können.

Wie die Erfahrung in der Praxis aufzeigt, werden die meisten Nachbestellungen spätestens 6 Wochen danach in Auftrag gegeben, so daß es unter dem Kostenaspekt ausreichend ist, die Speichergröße entsprechend zu bemessen. Nach dem Löschen eingehende Kopieraufträge werden wie bei der Herstellung des Erstpositivs abgewickelt.

Vorzugsweise weist gemäß Patentanspruch 10 die Streifen-Filmentwicklungseinrichtung eine Eingabeeinrichtung fiir die Auftragsdaten und einen mit der Eingabeeinrichtung und dem Massenspeicher verbundenen Prozessor auf und die Auftragsdaten werden im Massenspeicher abgespeichert.

Ein weiterer, erheblicher Nachteil bei den heute praktizierten Arten der Nachbestellung ist der hohe Arbeitsaufwand im Fotolabor, verbunden mit einem ebenfalls beträchtlichen Materialaufwand. Zwar ist der eigentliche Kopiervorgang automatisiert, die Übertragung der auf unterschiedlichen Nachbestellungsformularen oder Bestellzetteln oder Nachbestellungsstreifen notierten Wünsche auf ein maschinenlesbares Medium ist jedoch sehr zeitaufwendig und birgt die Gefahr von Fehleingaben.

Eine weitere Möglichkeit, seine Nachbestellungswünsche zu formulieren, besteht darin, daß einige Fotolabors gleich nach der Erstentwicklung der Negative einen sogenannten Nachbestellungsstreifen (entsprechend bedruckter Papierstreifen mit einem Selbstklebeband) an den Negativstreifen kleben. Nachteilig bei dieser Nachbestellungsmethode ist, daß zunächst nach der Erstentwicklung der gesamte Negativfilm mit diesem Nachbestellungsstreifen ausgerüstet werden muß. Das bedeutet einen nicht unerheblichen Arbeitsaufwand und es wird ein relativ teures und obendrein umweltschädliches Kunststoffklebeband verwendet. Für den Fotografen ergibt sich dabei der Nachteil, daß er das zu kopierende Negativ identifizieren und unterhalb dieses Negativs auf dem Nachbestellungsstreifen die gewünschte Anzahl notieren muß. Das gewünschte Bildformat und die Oberfläche der Fotos muß er dann auf einem anderen Zettel oder der Arbeitstasche vermerken.

Diese Form der Bildnachbestellung führt also nicht zwangsweise zu einer eindeutigen Informationsübertragung zwischen dem Fotografen und dem Fotolabor. Besonders dann werden immer wieder von den falschen Negativen Bilder angefertigt, wenn vom gleichen Filmstreifen wiederholt Bilder nachbestellt werden, da die ursprünglichen Bestellwünsche sich noch auf dem Nachbestellungsstreifen befinden.

Wird dagegen eine spezielle maschinell lesbare Nachbestellungskarte (z.B. DE-C1-42 10 171) benutzt, so ist der gesamte Kostenaufwand fiir Nachbestellungskarte und entsprechende Geräteausstattung hoch und erfordert eine spezielle Handhabung. Gleichgültig über welchen Weg der Fotograf seine Nachbestellungswünsche formuliert, sind durch die Verschiedenheit der Nachbestellungsmethoden viele Möglichkeiten von Ungenauigkeiten gegeben und es kommt sehr oft zu Mißverständnissen zwischen dem Besteller und dem ausführenden Labor.

Diese Nachteile werden bei der erfindungsgemäßen Vorrichtung nach Patentanspruch 10 vermieden, da zur Kennzeichnung des jeweils zu kopierenden Bilds lediglich eine Bestellnummer einzugeben ist, die automatisch den nachfolgenden Verarbeitungsgeräten zur Verfügung steht.

Bei einer bevorzugten Ausgestaltung der Erfindung ist, gemäß Patentanspruch 11, mit dem Positiv-Ausgabegerät eine Bildbearbeitungseinrichtung verbunden, welche einen Prozessor, eine Eingabeeinrichtung und eine Anzeigeeinrichtung aufweist und vor dem Ausdrucken wird das im Massenspeicher befindliche Bild mit den zugehörigen Auftrags- und Speicherdaten an der Anzeigeeinrichtung dargestellt.

Beim Stand der Technik werden die Kopien von Filmstreifen angefertigt (z.B. DE-C1-42 10 171). Dabei kann es vorkommen, daß ein Filmstreifen leicht schräg eingegeben und in dieser Position an das Trägerband angeklebt wird. Abgesehen davon, daß dies zu Störungen in der Führung des Filmmaterials in nachfolgenden Verarbeitungsstationen führen kann, werden auf diese Weise Bilder mit unschönen Rändern produziert. Weiterhin können Filmstreifen mit der Emulsionsschicht auf der falschen Seite eingegeben und in dieser Position an das Trägerband angeklebt werden. Dies führt später zu seitenverkehrten und unscharfen Bildern; insbesondere bei Bildern, die Motive mit Beschriftungen enthalten, wird in diesem Fall die Schrift seitenverkehrt abgebildet. Derartige Bilder sind für den Kunden in der Regel nicht akzeptabel, und der Kopiervorgang muß mit korrekt liegenden Filmstreifen wiederholt werden.

Vielfach werden auch Filmstreifen eingegeben, die gar keine Negative enthalten, von denen der Kunde ein Bild wünscht. Dies ist insbesondere dann der Fall, wenn der Kunde sämtliche Filmstreifen mit dem Kopierauftrag mitsendet. Auf diese Weise werden viele Filmstreifen unnötigerweise an das Trägerband angeklebt, was zu einer massiven Produktivitätseinbuße in der Vorbereitungsstation und viel mehr noch bei den nachfolgenden Verarbeitungsstationen führen kann.

Die erfindungsgemäße Ausgestaltung der Vorrichtung nach Patentanspruch 11 weist den Vorteil auf, daß vor dem Ausdrucken durch das Bedienungspersonal eine Überprüfung der Kopienqualität erfolgen kann und vorstehende Fehlerquellen nicht auftreten können.

Schließlich besteht gemäß Patentanspruch 12 der Massenspeicher aus mindestens zwei Datenträgern für die Abtastwerte, welche als Cassetten, CD-ROM's, MOD's oder Daten- Streamerbänder ausgestaltet sind und welche innerhalb der Vorrichtung über eine Wechselvorrichtung einem oder mehreren Laufwerken zugeführt werden. Vorteile sind einfaches Handling, Multitasking, wirtschaftlicher Aufbau großer Archive einschließlich für Beweiszwecke.

Weitere Vorteile und Einzelheiten lassen sich der nachfolgenden Beschreibung einer bevorzugten Ausführungsform der Erfindung unter Bezugnahme auf die Zeichnung entnehmen. In der Zeichnung zeigt
- Fig. 1: eine perspektivische Ansicht einer bevorzugten Ausführungsform der erfindungsgemäßen Vorrichtung und
- Fig. 2: das Blockschaltbild der Vorrichtung zur Durchführung des Verfahrens gemäß der Erfindung.

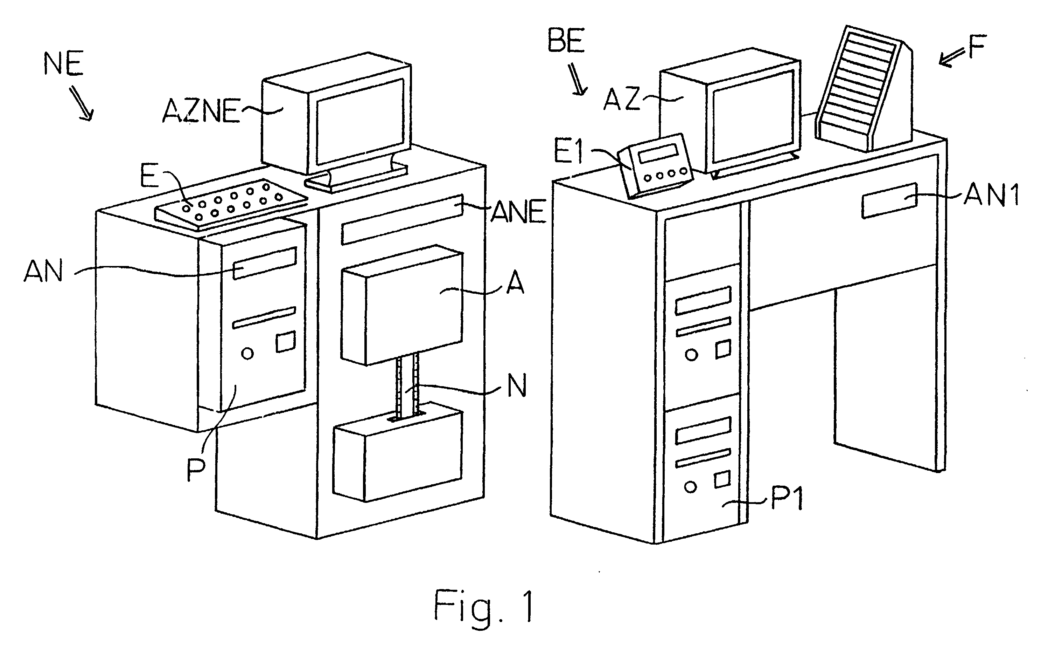

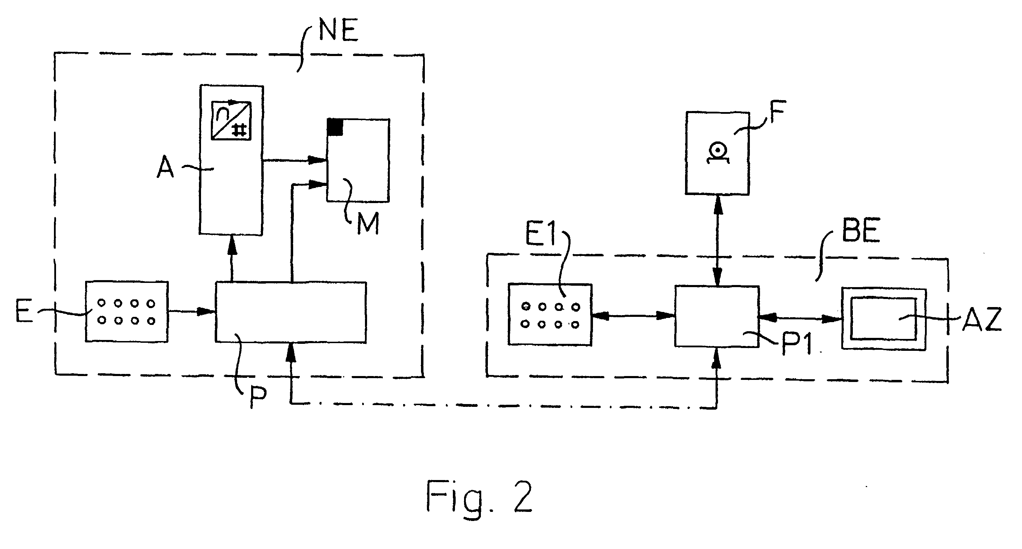

Fig. 1 zeigt in perspektivischer Ansicht die erfindungsgemäße Vorrichtung mit einer Streifen-Filmentwicklungseinrichtung NE, mit einer Einrichtung (Positiv-Ausgabegerät) F zur Erzeugung eines Positivbildes und einer im Arbeitsplatz des Positiv-Ausgabegeräts F integrierten Bildbearbeitungseinrichtung BE. Im einzelnen weist die Streifen-Filmentwicklungseinrichtung NE u.a. einen Abtaster A, eine Aufnahme AN, einen Prozessor P und eine Eingabeeinrichtung E auf. Weiterhin ist am Positiv-Ausgabegerät F u.a. eine Aufnahme AN1 angeordnet. Schließlich weist die Bildbearbeitungseinrichtung BE u.a. einen Prozessor P1, eine Anzeigeeinrichtung AZ und eine Eingabeeinrichtung E1 auf. Das erfindungsgemäße Verfahren wird anhand der Fig. 2 näher beschrieben und erläutert.

Das in Fig. 2 dargestellte Blockschaltbild zeigt das Prinzip der erfindungsgemäßen Vorrichtung deutlich auf. Zum Abarbeiten des Kundenauftrags wird das zu entwickelnde Filmmaterial in einen Adapter ANE der Streifen-Filmentwicklungseinrichtung NE eingelegt und wie eingangs beschrieben liegt nach dem Auswaschen der Entwickler- und Fixierlösungen aus dem Film und der Trocknung das Bild N vor. Bei handelsüblichen Streifen-Filmentwicklungseinrichtung NE wird der Negativstreifen mit einer Geschwindigkeit von 1m/min, das entspricht zwanzig Bilder/min, ausgegeben.

Während bei bekannten Vorrichtungen auf der Basis des Negativs N die photografischen Kopien hergestellt werden, wird erfindungsgemäß während des Filmstreifen-Entwicklungsprozesses das Bild N auf dem Filmstreifen abgetastet und die Bilddaten abgespeichert und von den gespeicherten Bildern werden sowohl das Erstpositiv (Erstkopie) als auch aile weiteren Positivbilder (Kopien) ausgedruckt. Der Abtaster A für das Bild N ist am Ausgang der Streifen-Filmentwicklungseinrichtung NE (d.h. an der Stelle an der das entwickelte Bild vorliegt) angeordnet und die Abtastwerte werden nach Analog-Digital-Wandlung (und ggf. nach optischer Kontrolle an der Sichtstation AZNE und Korrektur z.B. von Farbdichte/Farbstich) dem Massenspeicher M zugeführt. Um eine hohe Bildqualität zu erreichen, erfolgt die Abtastung von 3.000 · 2.000 Bildelementen (pixel), d.h. 18 Mio Bildelemente/Bild (RGB). Mögliche automatische Steueroptionen des Abtasters A (Scanner) sind:
a) ob das Bild richtig ausgerichtet ist,
b) die Bildart, d.h. Farbbild, Graustufenbild,
c) die optimale Helligkeits- und Kontrasteinstellung,
d) ob das Bild Moiree-Muster oder andere Anomalien aufweist,
e) ob das Bild aus Text und Grafik besteht,
f) ob sich um das Bild herum Unreinheiten wie Verschmutzungen oder Markierungen befinden.

Nach dem Scanvorgang kann das Bild in einem der standardmäßigen Dateiformate gespeichert werden (TIFF, PICT, JPEG usw.). Unter Berücksichtigung der Entwicklungszeit von 3 sec pro Bild und durch Anwendung von Datenkompressionsverfahren werden dem Massenspeicher selbst ohne Einsatz von Bilddaten-Komprimierung nur ca. 2 Mb/sec zugeführt. Weist der Massenspeicher M eine Speicherkapazität von 1TByte auf, so können ca. 20.000 bis 30.000 Filme gespeichert werden. Als Massenspeicher können auch 8 mm Video-Cassetten, CD-ROM, MOD, Streamer mit entsprechenden Laufwerken und Wechselvorrichtungen o. dgl. Anwendung finden.

Erfindungsgemäß wird jedem gespeicherten Bild eine Adresse zugeordnet, wobei zumindest die Speicheradresse als Bestellnummer auf der Kopie, vorzugsweise auf der Rückseite, ausgedruckt wird; daneben kann auch Indexprint durchgerührt werden. Die Auftragsdaten, wie beispielsweise maschinell lesbare Angaben über Annahmestelle und Auftragsnummer, Angaben über Filmformat, Größe und Anzahl der Kopien können ebenfalls im Massenspeicher M abgespeichert werden. Zur Organisation der Verwaltung größerer Datenmengen können in einem Gesamtverzeichnis (directory) des Prozessors P1 die Auftragsdaten sowie die Speicherdaten der jeweiligen Massenspeicher M abspeichert werden. Anhand dieser Daten im Gesamtverzeichnis erfolgt dann die Aktualisierung und das Löschen der Bilder im jeweiligen Massenspeicher M. Die Berechnung der Auftragskosten kann ebenfalls mit dem Prozessors P1 nach Maßgabe der Adressen erfolgen.

Vorzugsweise werden in bestimmten Zeitabständen die am längsten gespeicherten Bilder automatisch gelöscht. In der Praxis kann dieser Zeitabstand zwischen 6 und 12 Wochen liegen. Weiterhin ist es von Vorteil, wenn vor dem Ausdrucken das im Massenspeicher M befindliche Bild mit den zugehörigen Auftrags- und Speicherdaten an der Anzeigeeinrichtung AZ dargestellt wird. Auf der Basis des gespeicherten Bildes lassen sich eine Reihe von Bildbearbeitungsfunktionen, einschließlich von Bildeffekten wie Farbton ändern, Farbe ändern, Glätten/Scharfzeichnen, Bild malen, Prägen, Mosaik oder Einzelheiten hervorheben, Bereiche für Ausschnittsvergrößerungen wählen, Bild beschriften durchführen.

Wie die nachfolgende Gegenüberstellung der Durchlaufzeiten T_{DZ} von Stand der Technik und erfindungsgemäßem Verfahren aufzeigt, kann T_{DZ} erheblich reduziert werden:
- St. D. T.:: T_{DZ} = T_{N} + n · T_{VN} + T_{Man} + T_{P} + n · T_{VP}
- Erfindung:: T_{DZ} = T_{N} + n · T_{VN}
- mit:: T_{N} von ca. 12 min; T_{P} von ca. 5 min und T_{VP} << T_{N}

Beim Stand der Technik, z.B. in einem "Minilab", ist die Vorschubzeit T_{VP} pro Papierbild wesentlich kürzer als die Zeit T_{N} fiir die Negativentwicklung; T_{N} liegt in der Regel bei ca. 12 min und die Zeit T_{P} des Papierprozesses bei ca. 5 min. Demzufolge werden schnelle Belichter und Papierprozesse benötigt, um die beim oben dargelegten Stand der Technik prinzipbedingten Totzeiten wieder "einzuholen". Dieses Problem wird noch verschärft durch die parallele Entwicklung von mindestens zwei Filmen mit einer Vorschubzeit T_{VN} pro Bild, wie z.B. in einem "Minilab". Hinzu kommt noch die Manipulationszeit T_{Man} pro Einzelfilm oder Filmrolle (z.B. 50 Filme).

Erfindungsgemäß kann dagegen der Papierprozeß entweder parallel zur Negativentwicklung gestartet werden (Vorteil: langsame Belichter verwendbar) oder kurz vor den letzten Bildern des Films, so daß in der Einheit gerade alle Bilder (n = Zahl der Bilder) gedruckt werden können, und keine weitere zusätzliche Zeit fiir den Positivprozeß benötigt wird.

Die erfindungsgemäße Vorrichtung weist den Vorteil auf, daß auf übeiraschend einfache Art und Weise Nachbestellungen anhand einer eindeutigen Bestellnummer ermöglicht werden. Dabei sind alle weiteren Kopien in der gleichen Bildqualität wie die Erstkopie (Erstpositiv). Das Handling fiir die Bedienungsperson in dem Labor wird wesentlich vereinfacht, eine ganze Reihe von Fehlerquellen ist nicht mehr vorhanden und die Durchlaufzeit für einen Kundenauftrag wird erheblich verkürzt. Auch ist die Gefahr von Beschädigungen, z.B. Kratzer oder Ausbleichen des Negativs beseitigt und das Säubern des Negativs vor dem Kopieren ist nicht mehr erforderlich. Weiterhin ist von Vorteil, daß Nachbestellungen auch telefonisch durchgegeben werden können. Zudem besteht die Möglichkeit die Nachbestellungen in Selbstbedienung durchführen zu lassen. Sollen bestimmte Bilder über einen längeren Zeitraum gespeichert und nicht nach 6 bis 12 Wochen wieder gelöscht werden, z.B. Aufnahmen, die zu Beweiszwecken dienen oder Hochzeitsbilder, so können diese auch auf einem regenerierbaren Datenträger als Massenspeicher abgespeichert werden oder von vornherein mit einem Lösch-Sperrvermerk abgespeichert werden.

Alle dargestellten und beschriebenen Ausführungsmöglichkeiten, sowie ihre Kombination untereinander, sind erfindungswesentlich. Beispielsweise können die Streifen-Filmentwicklungseinrichtung NE und das Positiv-Ausgabegerät F über entsprechende Schnittstelleneinrichtungen miteinander verbunden sein, so daß bestimmte Komponenten wie Prozessor, Eingabeeinrichtung, Anzeigeeinrichtung nur einmal vorhanden sind und im Multitasking betrieben werden, wobei der Massenspeicher dann auch in der Streifen-Filmentwicklungseinrichtung NE oder dem Positiv-Ausgabegerät F integriert sein kann (in Fig. 2 punkt-strichliniert dargestellt); als Positiv-Ausgabegerät kann ein Fotodrucker, z.B. ein Laserdrucker oder ein Tintenstrahldrucker, benutzt werden usw..

## Patentansprüche

1. Verfahren zur Herstellung von Positivbildern, bei dem der Filmstreifen entwickelt und Positivbilder hergestellt werden mit einem Filmabtaster (A) **dadurch gekennzeichnet, dass** alle auf dem Filmstreifen befindlichen Bilder (N) während des Filmstreifen-Entwicklungsprozesses vollständig abgetastet und die abgetasteten Bilddaten pro Bild in einem zur Herstellvorrichtung gehörenden Massenspeicher (M) abgespeichert werden und dass ausschließlich aus diesen abgespeicherten Bilddaten - unter Heranziehung einer Adresse - das Erstpositiv und alle bei einer Nachbestellung anfallenden weiteren Positivbilder hergestellt werden.

2. Verfahren nach Anspruch 1, **dadurch gekennzeichnet, dass** die jedem gespeicherten Bild zugeordnete Adresse auf dem Positivbild mit ausgedruckt wird.

3. Verfahren nach Anspruch 2, **dadurch gekennzeichnet, dass** in Klarschrift und/oder maschinenlesbarem Code zumindest die Speicheradresse als Bestellnummer auf dem Positivbild ausgedruckt wird.

4. Verfahren nach Anspruch 1, **dadurch gekennzeichnet, dass** in bestimmten Zeitabständen die gespeicherten Bilder automatisch gelöscht werden.

5. Verfahren nach Anspruch 2, **dadurch gekennzeichnet, dass** die Berechnung der Auftragskosten mittels eines Prozessors (P1) nach Maßgabe der Speicheradressen erfolgt.

6. Verfahren nach Anspruch 5, **dadurch gekennzeichnet, dass** der Prozessor (P1) in einem Gesamtverzeichnis die Auftragsdaten sowie die Speicherdaten der jeweiligen Massenspeicher (M) abspeichert und daß anhand dieser Daten im Gesamtverzeichnis die Aktualisierung und das Löschen der Bilder im jeweiligen Massenspeicher (M) erfolgt.

7. Vorrichtung mit einer Streifen-Filmentwicklungseinrichtung (NE), mit einer Einrichtung (F) zur Erzeugung eines Positivbildes mit einem Filmabtaster (A), außerhalb und direkt am Ausgang der Streifen-Filmentwicklungseinrichtung (NE) für das vollständige Abtasten der Bilder (N) des Filmstreifens angeordnet ist, und mit einem Massenspeicher (M), dem alle Bilddaten des jeweiligen Filmstreifens zugeführt werden, **dadurch gekennzeichnet daß** der Massenspeicher zu der Vorrichtung gehört, bei ihr verbleibt und derart ausgelegt ist, dass ausschließlich aus diesen abgespeicherten Bilddaten - unter Heranziehung einer Adresse - die Erstpositive des jeweiligen Filmstreifens und alle bei einer Nachbestellung anfallenden weiteren Positivbilder in der Einrichtung (F) hergestellt werden.

8. Vorrichtung nach Anspruch 7, **dadurch gekennzeichnet, dass** ein transportabler Massenspeicher (M) benutzt wird und daß die Streifen-Filmentwicklungseinrichtung (NE) und das Positiv-Ausgabegerät (F) jeweils eine Aufnahme (AN, AN1) für den Massenspeicher (M) aufweisen.

9. Vorrichtung nach Anspruch 7, **dadurch gekennzeichnet, dass** die Speichergröße des Massenspeichers (M) derart bemessen ist, daß Bilder (N) im Auftragsumfang von mehr als einem Tag abgespeichert werden können.

10. Vorrichtung nach einem der Ansprüche 7 bis 9, **dadurch gekennzeichnet, dass** die Streifen-Filmentwicklungseinrichtung (NE) eine Eingabeeinrichtung (E) fiir die Auftragsdaten und einen mit der Eingabeeinrichtung (E) und dem Massenspeicher (M) verbundenen Prozessor (P) aufweist und daß die Auftragsdaten im Massenspeicher (M) abgespeichert werden.

11. Vorrichtung nach einem der Ansprüche 7 bis 10, **dadurch gekennzeichnet, dass** mit dem Positiv-Ausgabegerät (F) eine Bildbearbeitungseinrichtung (BE) verbunden ist, welche einen Prozessor (P1), eine Eingabeeinrichtung (E1) und eine Anzeigeeinrichtung (AZ) aufweist und daß vor dem Ausdrucken das im Massenspeicher (M) befindliche Bild mit den zugehörigen Auftrags- und Speicherdaten an der Anzeigeeinrichtung (AZ) dargestellt wird.

12. Vorrichtung nach einem oder mehreren der Ansprüche 7 bis 11, **dadurch gekennzeichnet, dass** der Massenspeicher (M) aus mindestens zwei Datenträgern für die Abtastwerte besteht, welche als Cassetten, CD-ROM's, MOD's oder Daten-Streamerbänder ausgestaltet sind und welche innerhalb der Vorrichtung über eine Wechselvorrichtung einem oder mehreren Laufwerken zugeführt werden.

## Claims

1. A method for producing positive images by an producing device, wherein a film is developed and positive images are produced therefrom by an optical scanning means (A), **characterized in that,** during a film development process, scanning all image frames (N) on the film to produce sampled images of all image frames (N) and storing said sampled images, frame by frame, in a digital mass storage device (M) of the producing device and creating all first pass positive prints exclusively from said stored sampled images and creating all subsequent re-order, re-make prints exclusively from said stored sampled images.

2. The method of claim 1, further comprising mapping each image frame to a memory storage address and printing said memory storage address an a respective positive print.

3. The method of claim 2, wherein said memory storage address is printed on said respective positive print in at least one of a human readable and/or a machine readable manner for recording an order number.

4. The method of claim 1, further comprising automatically erasing stored. image data following a defined storage duration.

5. The method of claim 2, further comprising calculating order costs using a digital processor (p1) in response to said memory storage address.

6. The method of claim 5, wherein said digital processor (P1) writes order data and memory storage data of an associated digital mass storage device (M) to a directory and further comprising updating and deleting image date through reference to said. directory.

7. A device for making positive images from film, the device comprising a continuous film processor (NE), a positive image output device (F) comprising an optical scanning means (A) disposed outside and directly downstream of said continuous film processor (NE), said scanning means (A) completely sampling all image frames of the film, and a mass storage unit M), wherein writing all image data of a respective film onto said mass storage unit (M), **characterized in that,** the mass storage unit (M) belongs and remains to the device and is designed for creating all first pass positive prints exclusively from said stored sampled images and creating all subsequent re-order, re-make prints exclusively from said stored sampled images.

8. The device of claim 7, wherein said mass storage unit (M) is transportable and wherein said continuous film processor (NE) and said positive print output device (F) comprise means (AN, AN1) for accepting said mass storage unit (M).

9. The device of claim 7, wherein a memory capacity of said mass storage unit (M) is dimensioned for storing a picture volume in excess of one laboratory production day.

10. The device as claimed in one of claims 7 to 9, wherein said continuous film processor (NE) comprises an input facility (E) for order data and a digital processor (F), said digital processor (F) connected to said input facility (E) and said mass storage unit (M), wherein said order data are written to said mass storage unit (M).

11. The device as claimed in one of claims 7 to 10, further comprising an image processing unit (BE) connected to said positive print output device (F), said image processing unit (BE) having a digital processor (P1), an input facility (E1) and a display facility (AZ), wherein an image which is stored in said mass storage unit (M) is displayed, together with associated order and storage data, prior to printing.

12. The device as claimed in one or more of claims 7 to 11, wherein said mass storage unit (M) comprises at least two storage units for sampled data, wherein said at least two storage units are one of cassettes, CD-ROM's, MOD's or data streamer tapes and further comprising a transfer unit for feeding said at least two storage units to a data read/write device.

## Revendications

1. Procédé de fabrication des images positive dans lequel le bande de film est développé et des images positive sont fabriquées avec une unité de scanner (A), **caractérisé en ce que,** pendant d'une développement de film, on balayagées entièrement tous les images (N) de bande de film et on mémorisées les données d'images, image à image, à une mémoire de masse (M) d'une dispositif de fabrication et **en ce que** on fabriqué seulement de données d'images - utiliser d'une adresse - le première positive et tous les images positive de la commande supplémentaire.

2. Procédé de fabrication suivant la revendication 1, **caractérisé en ce que,** imprimer sur l'image positive l'adresse attribuer à l'image mémorisé.

3. Procédé de fabrication suivant la revendication 2, **caractérisé en ce que,** imprimer sur l'image positive en clair et/ou en forme codée au moins l'adresse de mémoire comme numéro de commande.

4. Procédé de fabrication suivant la revendication 1, **caractérisé en ce que,** de temps en temps les images mémorisées étant effacées automatiquement.

5. Procédé de fabrication suivant la revendication 2, **caractérisé en ce que,** à l'aide d'une processeur (P1) la calculation des comptes de la commande, en raison de l'adresse de mémoire, étant réalisé.

6. Procédé de fabrication suivant la revendication 5, **caractérisé en ce que,** les donées de la commande ainsi que les données de mémoire sont mémorisées dans une. liste générale du mémoire de masse (M) par le processeur (P1) et **en ce que** suite aux données dans la liste générale le mis à jour et l'effacement dans chacun mémoire de masse (M) étant réalisées.

7. Dispositif comprenant une appareil de développement de films photographiques (NE), un moyen (F) destine à créer une image positive avec une unité de scanner (A) pour balayager entièrement tous les images (N) de bande de film, la même fixé hors de et directement près de sortie d'appareil de développement de films photographiques (NE), et une mémoire de masse (M), quelle étant amenées tous les données d'images de chacun bande de film, **caractérisé en ce que,** la mémoire de masse (M) est placé et fais partie du moyen destine à créer une image positive (F) et étant formé pour fabriqué seulement avec les données d'images - utiliser d'une adresse - le première positive et tous les images positive de la commande supplémentaire.

8. Dispositif suivant la revendication 7, **caractérisé en ce que**, la mémoire de masse (M) est transportable et **en ce que** le développement de films photographiques (NE) et le moyen destine à créer une image positive (F) (F) comprenant une insertion (AN, AN1) pour la mémoire de masse (M).

9. Dispositif suivant la revendication 7, **caractérisé en ce que,** la capacité de la mémoire de masse (M) étant mesuré pour mémorisé d'images (N) avec l'étendue de charge plus d'un jour.

10. Dispositif suivant l'une quelconque des revendications 7 à 9, **caractérisé en ce que,** le développement de films photographiques (NE) comprenant un moyen d'entrée (E) pour les données de la commande et une processeur (P1) mets en communication avec le moyen d'entrée (E) et la mémoire de masse (M) dans lequel les données de la commande étant mémorisées.

11. Dispositif suivant l'une quelconque des revendications 7 à 10, **caractérisé en ce que,** le moyen destine à créer une image positive (F) mets en communication avec un moyen de préparation d'image (BE), ladite comprenant une processeur (P1), un moyen d'entrée (E) et un moyen d'affichage (AZ) et **en ce que**, avant listage, l'image mémorisé en la mémoire de masse (M) étant représenté avec les données d'images et les données de la commande au moyen d'affichage (AZ).

12. Dispositif suivant l'une quelconque des revendications 7 à 11, **caractérisé en ce que,** la mémoire de masse (M) comprenant pour les échantillons au moins deux supports à données, qui sont formées comme cassettes, CD-ROM's, MOD's ou bandes de flûte et qui sont à l'intérieur du dispositif conduit par un dispositif de conversion chez une ou plusieurs lecteurs.
